# EUROPEAN PATENT APPLICATION

(11) **EP 4 269 087 A1**
(43) Date of publication of application: **01.11.2023**
(21) Application number: 21909610.4
(22) Date of filing: 21.12.2021
(51) Int. Cl.: B32B 1/08, E04B 1/16, B29C 70/42, B61B 13/10

(54) **PORTABLE TUBULAR STRUCTURE AND FIXED TUBULAR STRUCTURE DERIVED FROM SAME**

(30) Priority: 23.12.2020 ES 202031298
(71) Applicant: Universitat Politecnica de Valencia, 46022, Valencia (ES); Zeleros Global, S.L., 46024 Valencia (ES)
(72) Inventor: ALBIOL IBÁÑEZ, José Ramón, 46022 VALENCIA (ES); BONET SENACH, José Luis, 46022 VALENCIA (ES); FERNÁNDEZ PRADA, Miguel Ángel, 46022 VALENCIA (ES); MIGUEL SOSA, Pedro, 46022 VALENCIA (ES); ORIENT MARTÍN, Daniel, 46024 VALENCIA (ES); PISTONI PÉREZ, David, 46024 VALENCIA (ES); VICÉN BALAGUER, Juan, 46024 VALENCIA (ES); COS-GAYÓN LÓPEZ, Fernando José, 46022 VALENCIA (ES); LOZANO BARRACHINA, Jaime, 46022 VALENCIA (ES)
(74) Representative: Cueto, Sénida
(86) International application number: PCT/ES2021/070914
(87) International publication number: WO 2022/136715

(57) **Abstract**

The present invention relates to a portable tubular structure comprising at least the following concentric layers: - an inner layer, formed by at least one sheet, the free surface of said inner layer, which is the innermost surface, being able to form a cavity when the structure is in its deployed position - an intermediate layer, to which the inner layer is attached; said intermediate layer is a bag capable of holding a filler material - an outer layer, attached to the intermediate layer; said outer layer is formed by at least one sheet of the same, or of a different, material from that of the sheet of the inner layer; to a fixed structure derived from the same, and to its use in hyperloop technology for the construction of means of transport such as trains..

## Description

### TECHNIQUE SECTOR

The present invention is encompassed within the field of technology called "hyperloop" for the transport tunnel industry, for example, passenger or cargo trains, or for industry, for example, for wind turbine shafts or any type of shaft. or post in general.

### STATE OF THE ART

In the construction industry, the current infrastructures of the "hyperloop" transportation concept are based on steel pipes, which are difficult to handle and transport. Its costly production in steel processes and in large-diameter pipe-making facilities, gave rise to the need to reduce costs in its construction, transportation, and put into work.

Currently, it is unthinkable to transport this type of infrastructure in one piece and on-site assembly is very expensive.

Document NL8102255A discloses a structure made up of a metallic tube inside which an inflatable bag has been placed and a reinforcing material on it. All of this can also be covered with an external sleeve. The manufacturing method comprises covering the inner wall of the mentioned tube (thin-walled, which can be made of aluminum) with at least one layer of uncured reinforced plastic (for example, carbon fiber, in which the fibers are preferably arranged in longitudinal direction with respect to the tube). This layer of uncured plastic is placed around a non-inflatable bag (e.g. silicone rubber) and then the bag with the plastic is simultaneously introduced into the outer tube. The bag is pressurized by gas and held under pressure during the curing of the plastic. The process saves labor and results in a more precise product, allowing the fibers to be oriented in the longitudinal direction to maximize tensile strength, flexural strength, and resistance to radial loading. The product combines high strength and impact resistance with low weight.

The structure of the present invention, which comprises at least two concentric layers, each of which has at least one sheet of composite material, and which are connected by an intermediate layer ("sandwich" type structure), is different from that described in NL8102255A, and as a result of those differences, it has advantages such as being much less bulky, so transportation is much easier. The portable tubular structure of the present invention allows transport in a much more efficient way, since the inflation of the same is not carried out before the positioning of it in the final location for its use.

The present invention also has advantages derived from the type and arrangement of layers that gives greater rigidity and resistance to the assembly.

It also differs in the manufacturing method: in the case of NL8102255A, the inflatable bag is inflated and a warp of fibers is woven over it. In the present invention, inflating and then laying out material on the resulting product is not carried out. According in the present invention inflation is only carried out to have the assembled structure in its final location, formed by a mixture of previously woven materials.

Document WO02004105457A2 describes a slide bearing consisting of FRP ("fiber reinforced polymer") sheets, pre-impregnated carbon fibers at different angles and phenolic resin as a curing agent. These materials make up the internal composite lining of the bearing. The materials for this coating are initially placed on the external surface of a mandrel, and then inserted into a metal casing. Next, the mandrel is removed and the liner and metal casing are wrapped with a vacuum bag; a vacuum is applied so that the coating is in close contact with the interior surface of the metal casing; and then the metal casing with the prepreg is placed in an autoclave until the prepreg is cured, and finally the vacuum bag is removed.

The product disclosed in this document is different from the one of the present invention, since according to the present invention it is a sandwich-type structure with two sub-concentric structures or layers, nor is it manufactured in the same way. Nor is it intended for the same purpose.

These tubular structures of hyperloop technology are currently built by various methods: manual molding (hand lay up), pultrusion, infusion, etc., always along the entire length of the piece (their installations are expensive) and are difficult to transport (they use large vehicles), with difficult access to various areas).

In view of the state of the art, there are still needs and problems pending to be solved in technology related to hyperloop transport, which are objectives of the present invention:
1. Eliminate costly fixed installations (such as pultruders), making it possible to assemble a fixed tubular structure in workshops with reduced facilities and that a deflated portable structure can be transported to remote locations and installed "in situ".
2. Reduce the use of metallic materials, managing to reduce the carbon footprint, and the exploitation of the mines, less use of coal and reduction of costs of electrical energy systems to refine the steel.
3. Facilitate the transport of the structure through its modulation, with which light transport vehicles can be used with easy access to any area.
4. Facilitate construction and installation.
5. Build a lightweight structural system, with lightweight composite materials.
6. Achieve durability and longevity of the infrastructure, with little maintenance.

The advantages of the invention are:
- The most important advantage of the invention is that a portable structure is manufactured which, once on site, is inflated,
- Easy assembly on site, since heavy machinery is not necessary for transport or assembly. *In situ* assembly is 3 times faster than in known infrastructures, the savings are important for such high structural demands, because they are large structures such a as to be able to house a means of transport inside, such as a train and even with diameters and "oversize" lengths,
- fuel consumption is 3 times lower for transport than for the infrastructures known up to now,
- uses non-traditional ready-made materials,
- a structure according to the invention (even "oversize") can be moved at low cost, multiplying by 10 the units of pipes that can be transported in a single truck with respect to known infrastructures. Light vehicles with high maneuverability can be used, with which the inconvenience during transport with the rest of road traffic does not exist and it can circulate at any time without special permits.

The objectives of the invention are achieved through the use of portable tubular structures that are converted into fixed tubular structures in accordance with the claims of this application.

The building of this portable tubular structure, with the shape described below, previously manufactured in the workshop, allows rapid execution, storage in reduced spaces and rapid transport to the assembly site, reducing fuel consumption and facilitating access to places with difficult access by their roads.

Once on site, a fixed tubular structure can be assembled in a similar way to how a hot air balloon is assembled, for example (by blowing air under pressure or injecting material into the intermediate layer).

### DESCRIPTION OF THE INVENTION

The expression "tubular structure" in the present specification refers to an elongated structure that can have a cylindrical section, or of any type, for example, circular, oval, elliptical, square, rectangular section, and even I-shaped types, H, U, W, L, Z, X, V, S, T, Y, and having a central hole along its entire length.

The term "cementitious material" or "cementitious matrix" refers to any material that contains cement in any proportion, such as cement, concrete, microconcrete, mortar or micromortar.

The present invention refers first to a portable tubular structure comprising at least the following concentric layers:
- an inner layer, formed by at least one sheet whose free surface, which is the innermost surface, is capable of forming a hole when the structure is in the extended position
- an intermediate layer, to which the inner layer is attached, said intermediate layer is a bag capable of housing a filling material,
- an outer layer, joined to the intermediate layer, such that said outer layer is formed by at least one sheet of the same material, or a different material, than the sheet of the inner layer.

The term "extended" means unfolded - since it can be folded - or unrolled - since it can be rolled up.

The composition of all the sheets of the inner layer with respect to the composition of all the sheets of the outer layer can be different.

The composition of one of the sheets of the inner layer may be the same as the composition of one of the sheets of the outer layer.

The composition of more than one of the sheets of the inner layer may be the same as the composition of any of the sheets of the outer layer.

The embodiments described below - unless it is explicitly indicated that the composition of at least one of their sheets is said to be the same, or the specific composition of a sheet being coincident in the outer and inner layers is indicated - are applicable both to the case in which the outer layer and the inner layer of the portable tubular structure have a sheet of the same material, or more sheets of the same material, as well as to the case in which the material of which it is composed, does not coincide for any of its corresponding sheets.

The present invention relates more specifically to a portable tubular structure comprising at least the following concentric layers:
- an inner layer, formed by at least one sheet selected from carbon fiber sheets, glass fiber sheets, plastic fiber sheets, basalt fiber sheets, aramid sheets, polyamide fiber sheets, such as Kevlar, metal sheets, and combinations of said sheets whose free surface, which is the innermost surface, is capable of forming a hole when the structure is in the extended position
- an intermediate layer, to which the inner layer is attached, said intermediate layer is a bag capable of housing a filling material,
- an outer layer, joined to the intermediate layer, such that said outer layer is formed by at least one sheet selected from carbon fiber sheets, glass fiber sheets, plastic fiber sheets, basalt fiber sheets, aramid sheets, sheets of polyamide fibers, such as kevlar, metal sheets and combinations of said sheets.

The free surface of the inner layer is the surface of the inner layer opposite to the surface through which it is attached to the intermediate layer, and which -therefore- is not in contact with another surface of the portable structure when it is in the extended position, (i.e. unfolded or unrolled), and is capable of forming a hole that gives shape to a fixed tubular structure when the portable structure is placed in its final location.

According to particular embodiments, in the portable tubular structure:
- the outermost sheet of the outer layer
- or the innermost sheet of the inner layer-
- or both the outermost sheets and the innermost sheet of the structure are made of carbon fiber.

According to particular embodiments, the portable tubular structure also comprises an outer plastic sheet in contact with the outer layer and an inner plastic sheet in contact with the free surface, or innermost face, of the inner layer, such that both outer and inner plastic sheets form a casing that encloses the outer and inner layers of the portable structure, but maintaining the ability to form a hole that gives shape to a fixed tubular structure. The outer and inner plastic sheets can be of any plastic material, such as polyethylene.

According to additional particular embodiments of the portable tubular structure, the outer layer and the inner layer are formed by a different number of sheets.

According to additional particular embodiments of the portable tubular structure, the outer layer and the inner layer are formed by the same number of sheets.

According to additional particular embodiments, the outer layer and the inner layer are formed by the same number of sheets, these sheets being of identical composition in both layers, but being arranged in the inner layer in the reverse order to that in the outer layer. By way of example, a portable tubular structure with five sheets in the outer layer of different compositions and numbered from the outside to the inside as 1, 2, 3, 4 and 5, will have, according to this embodiment, an inner layer with five sheets of the same composition as those of the outer layer and arranged from the outside to the inside in the order 5, 4, 3, 2 and 1.

According to additional particular embodiments of the portable tubular structure, the outermost sheet and the innermost sheet of the structure are made of carbon fiber.

According to a preferred embodiment of the portable tubular structure, the outer layer is formed - from the outside inwards - by at least two sheets: a carbon fiber sheet and a fiberglass sheet, while the inner layer is formed - from the surface furthest from the center of the structure towards the interior - by sheets identical to those of the outer layer, placed in reverse order. That is, according to this embodiment, the inner layer is formed - starting from the surface furthest from the center of the structure inwards - by at least one glass fiber sheet and one carbon fiber sheet.

In a particularly preferred embodiment, the outer layer is made up of two sheets: an outer one made of carbon fiber, and an inner one made of fiberglass glued to it, and the inner layer is made up of two sheets identical to those of the outer layer, so that the carbon fiber sheet is the innermost of them.

The sheets that make up the outer and inner layers must be very thin to be able to fold them well or roll them up at the time of transport. For example, they may be between 0.03 mm and 2 mm, preferably between 0.03 mm and 1 mm. In a particular embodiment, the layers are 0.05 mm thick, such as 0.05 mm thick steel.

The sheets that make up each of the inner and outer layers comprise fibers of any weight and warp. These fibers can be arranged in a single direction with respect to the longitudinal axis of the structure, or they can be arranged in two directions (bidirectional) or in various directions with respect to said axis.

The orientation of the fibers with respect to each other, in a sheet, can vary so that the inclination of the fibers with respect to the longitudinal axis of the tubular structure can be between 0° and 360°, and according to particular embodiments it is 0°.

For example, the sheets can be formed by fibers that are arranged in more than one direction with respect to the longitudinal axis of the portable tubular structure, oriented in a manner selected from:
- an orientation selected between 45° and 90° with respect to the longitudinal axis of the portable tubular structure,
- in transverse directions, with respect to the longitudinal axis of the portable tubular structure and
- randomly oriented with respect to the longitudinal axis of the portable tubular structure.

The selection of sheets with a single orientation or more than one orientation, and the type of orientation, depends on the stresses to which the outer and inner layers are expected to be subjected, and, therefore, the fixed tubular structure of the invention that derived from the portable tubular structure. The orientation of the fibers in the sheets allows obtaining various mechanical properties, such as resistance to compression, shear, tearing, and tensile strength in different directions, among others.

The thickness of the outer, inner and intermediate layers depends on the application for which the fixed tubular structure derived from the portable structure is intended. For example, in the event that the interior of the fixed tubular structure is intended to house a means of transport, such as a train, this thickness depends on the number of wagons, train speed, expected accelerations, the distance between supports (called light in technology jargon), among other factors. The thickness of the entire portable tubular structure can be between 10 and 25 mm. By way of example, according to the state of the art, for a 1.5 m diameter tube, 12 m spans, for a 2TN (2 ton) test vehicle (and 5G test acceleration) the thickness is around 15 - 20 mm thick in steel. With the present invention, the total thickness - of the three combined layers - can be within this same range, but with 1/3 of the weight of a state-of-the-art structure.

The intermediate layer is made up of a bag of any flexible material capable of accommodating a filling material. This flexible material that makes up the bag is preferably a plastic material, more preferably a plastic polymeric material.

According to particular embodiments, the plastic bag can be, for example, made of polyethylene, such as high density polyethylene (HDPE) or low density polyethylene (LDPE).

The interlayer bag has closure systems, which can be valves, such as non-return valves, or car tire type closure systems, so that the bag can be, or is, hermetically closed. These valves or closure devices are preferably arranged on the bag before the bag is attached to the outer and inner layers of the portable tubular structure.

To said intermediate layer bag are adhered - each to one side of the bag - the inner layer and the outer layer.

The function of the bag of the intermediate layer is to house inside it the filling material, such as an expansive material, for example, a foam or a gas, (as examples of gases, air or argon can be mentioned). Among the expansive material, one can mention a material that is expansive when fresh, without hardening, such as expansive concrete or polyurethane foam. The filling material will contribute to shaping the fixed tubular structure in its final location.

The terms "expansive" and "expandable" are used herein as synonyms.

The present invention also refers to a fixed tubular structure comprising the concentric layers of the previously defined portable structure, wherein:
- in the inner layer, attached to the intermediate layer, the fibers of the sheet (and therefore, the sheet), or sheets, are held together by a matrix,
   and whose free surface forms the central, longitudinal interior hole of the fixed tubular structure,
- the intermediate layer comprises a filling material inside the bag,
- in the outer layer, attached to the intermediate layer on the opposite side to which the intermediate and inner layers are attached, the fibers of the sheet or sheets (and therefore the sheet(s)), are bound by a matrix.

In a similar way to that indicated for the portable tubular structure, the composition of all the sheets of the inner layer with respect to the composition of all the sheets of the outer layer can be different.

In a similar way to that indicated for the portable tubular structure, the composition of one of the sheets of the inner layer can be the same as the composition of one of the sheets of the outer layer.

In a similar way to that indicated for the portable tubular structure, the composition of more than one of the sheets of the inner layer can be the same as the composition of some of the sheets of the outer layer.

For the fixed tubular structure, the embodiments described below - unless the composition of at least one of its sheets is explicitly indicated to be the same, or the specific composition of a sheet that is coincident in the outer and outer layers is indicated. - are applicable both to the case in which the outer layer and the inner layer of the fixed tubular structure have a sheet of the same material, or more sheets of the same material, and to the case in which the material of which it is made any of their corresponding sheets does not coincide.

The matrix that binds the sheets of the outer and inner layers can be selected from a polymeric matrix and a cementitious matrix. The polymer matrix can be a matrix selected from a resin and a geopolymer.

The matrix that binds the sheets can be the same in the outer and inner layers, or it can be a different matrix in one layer compared to the other.

"Free surface" of the inner layer refers to the innermost surface, and - which in the finished fixed structure (when the inner bag used in the manufacturing process, described below, has already been removed-), is not in contact with other sheets or materials.

According to particular embodiments, the fixed tubular structure also comprises - as the corresponding embodiment in the portable structure - an outer plastic sheet in contact with the outer layer and an inner plastic sheet in contact with the free surface, or innermost face, of the inner layer, such that both the outer and inner sheets form an casing that encloses the outer layer and the inner layer of the fixed structure. The outer and inner plastic sheets can be of any plastic material, such as polyethylene.

According to a particular embodiment of the fixed tubular structure: the sheets that form the inner and outer layers are made of materials called FRP.

In FRP materials:
- the fibers can be of any material, in particular of the mentioned materials: carbon fibers, glass fibers, plastic fibers, basalt fibers, aramid fibers, polyamide fibers,
- and the matrix that binds the fibers is a polymeric or cementitious matrix.

The term FRP refers to "polymer reinforced fibers" or "fiber-reinforced polymers." They are composite materials, which comprise a polymeric or cementitious matrix, reinforced with fibers. The union of the fibers and the matrix convert them into an FRP sheet.

The fibers contained in the materials called FRP can be any type of fiber, and in particular, materials selected from among fiberglass, aramid, carbon fibers, plastic fibers, basalt fibers, polyamide fibers, such as Kevlar.

The preferred material among FRPs is Carbon Fiber Reinforced Polymer (CFRP) and GFRP (Glass Fiber Reinforced Polymer) (polymer reinforced with glass fiber).

The matrix in the case of using the FRP materials, according to particular embodiments, can comprise:
- resins, such as polyester resins, polyamide resins, vinylester resins, acrylic resins, epoxy resins, phenolic resins, urethane resins,
- cementitious materials
- geopolymers (polymers found in the earth's crust, such as aluminosilicates) and combinations thereof.

The expression "combinations of them" means that you can have one type of matrix material in the outer layer and another type of matrix in the inner layer, but the different types of matrix materials are not mixed in the same layer.

By way of example, FRP can be fiber meshes impregnated with resins, so that when the resin that binds them hardens, a very resistant mesh is generated.

FRP materials, such as CFRP or GFRP, have the function of supporting the stresses generated by the distance between the supports on which the structure is arranged, as well as the function of strapping, among others (wind, train actions, among others).

According to an additional particular embodiment of the fixed tubular structure: one or more of the sheets that form the inner layer, and/ one or more of those that form the outer layer comprise FML, or are composed of FML.

According to an additional particular embodiment of the fixed tubular structure: the sheets that form the inner and outer layers comprise or are composed of FML.

The materials called FML are composite materials that comprise the same type of fibers as in the case of FRP, wherein the matrix that binds the fibers is a polymeric or cementitious matrix, and to which a film or sheet of metallic nature has been added. That is to say, FML materials comprise in the fibers of the sheets the same materials as FRP and also comprise one or more metal sheets, such as steel, galvanized, or aluminum (all its variants, such as those that can be obtained according to the manufacturing process, or that may have some additional chemical element, or that are obtained depending on the type of cooling or modified metals obtained by chemical, mechanical, thermal and thermochemical processes). FML are laminates of thin layers of metal joined by sheets similar to those of an FRP material - as defined above. Among the best known FML some that contain aluminum, can be mentioned, such as:
ARALL (aluminum laminate reinforced with aramid fiber)
GLARE (aluminum laminate reinforced with glass fiber)
CARALL (aluminum laminate reinforced with carbon fiber)

The mechanical, chemical and thermal processes in metals are widely known. The modified metals are obtained by known techniques, for example hardening the material, powder metallurgy, metal shot blasting, etc.

The FML materials can be those known in the state of the art or they can be microperforated FML.

Microperforated FML are FML materials as defined above, wherein the metal sheets are microperforated.

In microperforated FML materials, the microperforations can represent between 5 and 95% of the metal sheet(s). The higher the percentage of perforations, the easier it is for the matrix material that binds the fibers, and therefore the sheets, to pass through said perforations.

There is an alternative to the fixed tubular structure according to which the metal sheet or sheets of the FML materials are not microperforated: it is the case that these metal sheets are placed adjacent to the bag of flexible material, the intermediate layer.

In the present invention, microperforated FML materials are preferably used, so that the matrix that binds the sheets can pass through said metal sheets.

FRP or FML materials reinforced, for example, with glassfiber are responsible for supporting the structure as a whole, preventing it from deforming and allowing it to withstand sub-pressures inside.

The polymeric matrix of the FML materials can comprise the same materials as in the case of the FRP materials. Preferably, in FML materials the matrix is a polymeric matrix of resins:
One can have, for example, a resin matrix in the outer layer and a cemmenticious matrix in the inner one.

According to particular embodiments, the fixed tubular structure comprises at least the following concentric layers:
- an inner layer formed by at least one sheet of a material selected from: FRP and FML, and whose free surface forms the central, longitudinal interior hole of the tubular structure,
- an intermediate layer, to which the inner layer and the outer layer are attached by opposite sides of the intermediate layer, said intermediate layer is formed by a bag of flexible material, comprising a filling material,
- an outer layer, joined to the intermediate layer, said outer layer is formed by at least one sheet of a material selected from among: FRP and FML.

According to particular embodiments of the fixed tubular structure, the outer layer and the inner layer are formed by the same number of sheets, these sheets being of identical composition in both layers, but being arranged in the inner layer in the reverse order to that in which they are found in the outer layer.

According to additional particular embodiments of the fixed tubular structure, the outermost sheet of the structure, or the innermost sheet of the structure, or both are made of FRP comprising carbon fiber.

According to additional particular embodiments of the fixed tubular structure, the innermost sheet of the outer layer, or the outermost sheet of the inner layer of the structure, or both, are made of FRP comprising glass fiber.

According to a particular embodiment, the outer layer is formed - from the outside in - by at least one FRP sheet with carbon fiber and one FRP sheet with glass fiber.

According to a particular embodiment, the inner layer is formed - from the surface furthest from the center of the structure towards the interior - by - at least - a sheet of FRP with glass fiber and a sheet of FRP with carbon fiber.

According to a preferred embodiment, the outer layer is formed - from the outside in - by at least one FRP sheet with carbon fiber and one FRP sheet with glass fiber, while the inner layer is formed - from the surface furthest from the center of the structure inwards - by sheets identical to those of the outer layer, placed in reverse order. That is, according to this embodiment, the inner layer is formed - from the surface furthest from the center of the structure towards the interior - by - at least - a sheet of FRP with glass fiber and a sheet of FRP with carbon fiber.

In a particular embodiment of the fixed tubular structure, the outer layer is made up of one or more FRP sheets, or one or more FML sheets, or combinations of FRP and FML sheets.

In a further particular embodiment of the fixed tubular structure, the inner layer is made up of one or more FRP sheets, or one or more FML sheets, or combinations of FRP and FML sheets.

In a further embodiment of the fixed tubular structure, the outer layer is formed by one or more FRP sheets, or one or more FML sheets, or combinations of FRP and FML sheets, while the inner layer is formed, from the surface furthest away from the center of the structure towards the inside, by sheets identical to those of the outer layer, placed in reverse order.

In a preferred embodiment of the fixed tubular structure:
- the outer layer is made up of two sheets: an outer one made of FRP with carbon fiber, and an inner one made of FRP with glass fiber, attached to it,
- or the inner layer is formed by two sheets identical to those of the outer layer, so that in the inner layer, the FRP sheet with carbon fiber is the innermost of them.

In a preferred embodiment of the fixed tubular structure, the outer layer is made up of two sheets: an outer one made of FRP with carbon fiber, and an inner one made of FRP with glass fiber, attached to it, and the inner layer is made up of two sheets identical to those of the outer layer, so that in the inner layer, the FRP sheet with carbon fiber is the innermost of them.

In a further embodiment of the fixed tubular structure, the outer layer is made up of two sheets: an outer one made of FML with carbon fiber, and an inner one made of FML with glass fiber, attached to it.

In a further embodiment of the fixed tubular structure, the inner layer is formed by two sheets: an inner one of FML with carbon fiber, and an outer attached to it, of FML with glass fiber.

In a further embodiment of the fixed tubular structure, the outer layer is made up of two sheets: an outer one made of FML with carbon fiber, and an inner one attached to it, made of FML with glass fiber, and the inner layer is made up of two sheets identical to those of the outer layer, so that in the inner layer the FML sheet with carbon fiber is the innermost of them.

In an additional preferred embodiment, the inner layer is formed by:
- two sheets: an inner one with carbon fiber, and an outer one made of metal and that makes up the FML material,
- or it is made up of two sheets: an inner one with glass fiber, and an outer one made of metal and that makes up the FML material

In an additional preferred embodiment, the outer layer is made up of:
- two sheets: an outer one with carbon fiber, and an inner one made of metal and that makes up the FML material,
- or it is made up of two sheets: an outer one with glass fiber, and an inner one made of metal and that makes up the FML material,

In an additional preferred embodiment, the outer layer is made up of:
- two sheets: an outer one with carbon fiber, and an inner one made of metal and that makes up the FML material,
- or it is made up of two sheets: an outer one with glass fiber, and an inner one made of metal and that makes up the FML material, and in each case, the inner layer is made up of two sheets identical to those of the outer layer arranged in reverse order.

For example, the fixed tubular structure can have an outer layer, comprising from the outside to the inside: FML+FRP or FRP+FML. In the same layer there can be a combination of FML and FRP.

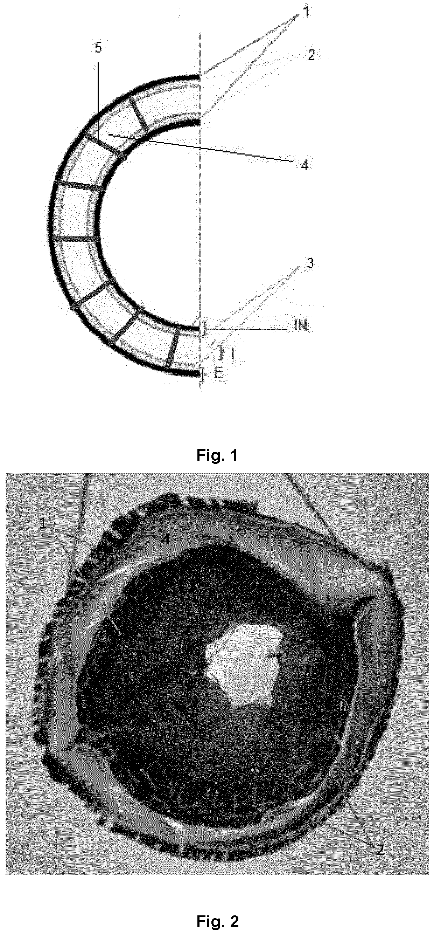

Some examples of composition of the fixed (finished) tubular structure are latticework of sheets (the sheets can be parallel to each other, or they can be crosslinked) of the following materials, named in all cases from the outside towards the inside:
- CFRP+GFRP+LDPE+expanded PU+LDPE+GFRP+CFRP is the pattern of the section shown in fig.1, named from the outside towards the inside,
- GFRP+CFRP+LDPE+expanded PU+LDPE+GFRP+CFRP
- GFRP+CFRP+LDPE+expanded PU+LDPE+CFRP+GFRP
- CFRP+STEEL+GFRP+LDPE+expanded PU+LDPE+GFRP+STEEL+CFRP wherein:
   LDEP stands for Low density polyethylene (low density polyethylene)
   PU stands for polyurethane.

Other alternative examples of fixed tubular structure are:
- that the outer layer has the composition CFRP+AI+GFRP+AI, as preferred, or
- that the outer layer has the composition: CRFP+GFRP+AI or CFRP+AI+GFRP

The sheets of fibers that make up the inner and outer layers in the fixed tubular structure, for example the sheets of FRP and/or FML, can be formed by fibers that are arranged in the same direction or in more than one direction with respect to the longitudinal axis of the fixed tubular structure. For example, the fibers may be oriented in different directions, analogously and as indicated for the fibers in the sheets of the portable tubular structure.

The thickness of the outer, inner and intermediate layers depends on the application for which the fixed tubular structure is intended.

Each of the fiber sheets that make up the inner and outer layers can be between 0.5 mm and 3 mm (for example, FRP and FML in the fixed tubular structure), preferably between 0.5 and 2.8 mm.

It is necessary to apply a binding material to the fibers of the outer and inner layers for its hardening and to achieve the rigidity of all its layers. With this material, which is the matrix, polymeric or cementitious, the durability of the structure is achieved. Depending on the type of material - matrix - desired hardening and/or curing and/or rigidity effects are obtained.

The binder matrix can be applied manually or automatically. It can be applied, for example, by spraying or vacuum-injection.

The intermediate layer is made up of a bag made of flexible material, such as plastic, which includes a filling material inside, preferably a plastic polymer. This intermediate layer will contribute to giving the fixed tubular structure its shape.

The bag of the intermediate layer is sealed (previously, during the manufacture of the portable structure) and filled when the portable tubular structure is in its final location to obtain the fixed tubular structure. To said bag are adhered - each on one side of the bag
- the inner layer and the outer layer.

To the bag of flexible, preferably polymeric material, the outer and inner layers are attached, preferably glued. They are glued to it, for example, with flexible elastic glue. Known glues can be used. An example of glue are acrylates

The filling of the intermediate layer is of an expandable material such as a material selected from a foam, a polymeric expanded material, such as polyurethane (PU), a gas (such as air or argon), and a cementitious material.

The filling material has the function of filling the entire interior of the bag of the intermediate layer (which will be hermetically closed once filled) and that once it is arranged in the bag it provides rigidity and the shape that the fixed tubular structure needs. providing it with sufficient resistance to maintain its shape and with a fairly low weight (compared to known structures).

The fixed tubular structure can further comprise a coating formed by one or more protective layers and, optionally, further decorative layers. The coating may comprise, by way of example, paints and limes.

The coating is applied to the inner (inner face of the inner layer), outer (outer surface of the outer layer) or both surfaces of the fixed tubular structure.

Paints or limes can be applied for different purposes such as protecting from fire, therefore, fire retardant paints can be applied. Thermal paints, anti-corrosion paints, against UV solar rays, absorbent paints of solar radiation that reduce the temperature of the structure, among others, can be applied. Decorative paints can also be applied to give color to the fixed tubular structure.

Regarding the mechanical behavior of the fixed tubular structure, the efforts to which it is subjected in a section, the efforts of a compression, traction, shear, torsion beam and point loads both in supports and along the tubular structure, are absorbed by the combination of sheets (such as FRP, FML) that make up the outer and inner layers, as well as by the intermediate layer.

According to a preferred embodiment, the fixed tubular structure comprises:
- inner layer: it comprises a framework of meshes or sheets of FRP and/or FML that comprise carbon fiber in the innermost part and that comprise glass fiber in the external part, in different orientations with respect to the longitudinal axis of the structure, such that the outermost FRP and/or FML sheet comprising glass fibers (larger dimensions, diameter in the case of structures made of circular section) inside the inner layer is attached to a plastic polymeric bag, as shown in Figure 1,
- intermediate layer: formed by a plastic bag to which the outermost sheet of FRP and/or FML comprising glass fiber, of the inner layer, are attached, and the innermost sheet of FRP and/or FML comprising glass fiber, of the outer layer, such that this bag is filled with expansive polyurethane foam,
- outer layer: comprises a framework of meshes or sheets of FRP and/or FML that include carbon fiber in the outermost part and that include glass fiber in the inner part, in different orientations with respect to the longitudinal axis of the structure, such that the innermost FRP sheet and/or FML -comprising glass fibers (of smaller diameter, in the case of circular section structures) - within the outer layer is glued to the plastic polymeric bag, as can be seen in Figure 1.

The invention has as an additional object a method for manufacturing the portable tubular structure and the fixed tubular structure defined above.

The manufacturing process for the portable tubular structure comprises:
- arranging the sheets of the outer layers,
- arranging a double sheet that will form the bag of the intermediate layer
- arranging the sheets of the inner layer
- carrying out the union of the sheets of the outer layer and, independently, carry out the union of the sheets of the inner layer
- joining the previous layers and
- arranging at least one valve in the double sheet of flexible material for the introduction of filling material,

being it possible to carry out the steps in an order other than the order in which they appear mentioned, and in particular, the last two steps can be carried out in the reverse order.

According to a first particular embodiment, the manufacturing process for the portable tubular structure comprises:
- arranging the sheets of the outer and inner layers
- carrying out the union of the sheets of the outer layer and, independently, carrying out the union of the sheets of the inner layer
- joining a double sheet of flexible material to form a bag (sealing) capable of housing filling material, to the two inner and outer layers, one on each side of the double sheet, obtaining the bag that forms the intermediate layer
- arranging at least one valve in the double sheet of flexible material for the introduction of filling material,
being it possible carry out the steps in an order other than the order in which they appear mentioned, and in particular, the last two steps can be carried out in the reverse order. The sheets of each of the outer and inner layers used in the first step are preferably joined together by interstitching.

The outer and inner layers are attached to the sheets that make up the bag of the intermediate layer by gluing. The respective sheet of the outer and inner layer, which is closest to the flexible material bag, of the intermediate layer, can be glued by heat sealing or with flexible plastic glue to the plastic bag, by ultrasonic wave or by induction. The gluing with flexible plastic glue to the bag of the intermediate layer is carried out in a percentage of the surface between 10 and 90% of each layer. In this way it is possible to roll up or fold the portable tubular structure to facilitate the transport of the portable tubular structure to the construction site -final location-

Optionally, the operation of gluing the two sets of inter-sewn sheets to the bag of flexible material can be carried out before the step of placing the valves for filling the bag, such as plastic, which forms the intermediate layer, but it is preferably carried out after placing the valves for filling the bag of flexible material.

The sealing of this bag of the intermediate layer can be carried out by heat sealing, by ultrasonic vibration or by induction, it is preferably sealed by heat sealing.

The bag has at least one valve that can be previously arranged, or that can be arranged once the sheets have been sealed and the bag has been formed. The valve or valves are used to introduce the filling material, and to control the exit of the excess of said material that may have been introduced.

The sealing of the polymeric bag is not done manually, it is done with non-return valves or car tire-type systems.

Induction sealing, or lid sealing, is a non-contact method of heating a metal disc to hermetically seal the top of plastic and glass containers. This sealing process is done after the container has been filled with its contents and the lid has been located in place. The name comes from the fact that the method uses the principle of electromagnetic induction to generate heat and fix the seal material.

According to a more particular embodiment, the process for manufacturing the portable tubular structure comprises:
- interstitching at least two meshes or sheets, one of carbon fiber and the other one of glass fiber, for the inner layer and at least two other sheets of the same materials - with an inverse distribution with respect to the inner layer - for the outer layer (see Figure 1),
- gluing the two sets of interstitched sheets on one side and on the opposite side of the double-sheet bag that will make up the bag of the intermediate layer, for example, using a glue for flexible plastics
- placement of at least one valve for filling with a filling material in a double sheet that will make up the bag of flexible material, which in turn makes up the intermediate layer
- sealing of a bag of flexible material of the intermediate layer, in the form of a tube with a heat sealer, leaving the opening of the valve or valves, which serves to introduce an expansive material, such as foam and controlling the exit of the excess material introduced.

The portable tubular structure is ready to be folded or rolled up and transported to the location of the fixed tubular structure.

The operation of gluing the two sets of inter-sewn sheets on one side and on the opposite side of the bag of flexible material that makes up the intermediate layer, using a glue for flexible plastics, can be done, alternatively, as follows:
- Interstitching of sheets obtaining the outer layer
- Gluing the outer layer to the sheet that makes up the bag of flexible material or to the previously shaped bag.
- Interstitching of sheets obtaining the inner layer
- Gluing the inner layer to the bag of flexible material.

According to a second alternative embodiment, the method for manufacturing the portable tubular structure comprises:
- arranging the sheets of the outer layers in extended position,
- placing on them the double sheet of flexible material that will form the bag of the intermediate layer
- placing the sheets of the inner layer on the previous double sheet,
- joining of all the previous sheets by their ends
- arranging at least one valve in the double sheet of flexible material for the introduction of filling material, the last two steps can be carried out in the reverse order.

According to an alternative embodiment, the manufacturing process for the portable tubular structure comprises:
- arranging an extended plastic sheet
- placing the sheets of the outer layers on it
- placing on them the double sheet that will make up the bag of the intermediate layer
- placing on the previous double sheet, the sheets of the inner layer
- arranging a second plastic sheet on the sheets of the inner layer
- joining of all the previous sheets by their ends
- arranging at least one valve in the double sheet of flexible material for the introduction of filling material,
- arranging valves in the outer and inner layers to be able to carry out a vacuum-infusion process in the final location.

The manufacturing process for the fixed tubular structure comprises:
- arranging the portable tubular structure, previously manufactured, in the location of the fixed tubular structure,
- inserting an internal bag into the interior hole of the structure,
- filling the inner bag by inflation or injection,
- filling the bag of the intermediate layer with the filling material,
- removing the inner bag,
- applying the material that binds the sheets of the outer and inner layers of the tubular structure of the previous step, obtaining the fixed tubular structure.

The joining of the outer and inner layers to each other can be done in two ways: by means of connectors, or through the intermediate layer, by contact with it, in which case they do not join directly with each other.

According to a particular embodiment, the inner layer and the outer layer are joined together by means of connectors arranged between them. This operation is carried out on site, that is, "in situ", at the final location. These connectors are rigid elements, e.g. made of metal (such as aluminium, steel) or of FRP. The connectors are connection elements that can have a section between 5 and 9000 mm² and their length can be, at most, the total thickness of the tubular structure. As can be seen in figure 1, they are placed radially and separated at an angle of between 25° and 35°, for example, approximately 30° with respect to the section. This alternative is a preferred embodiment of the invention.

Throughout the tubular structure the sections with connectors are separated by between 30 and 50 cm.

According to an additional particular embodiment, the inner layer and the outer layer are joined to each other, along their contour (this is only when put into work, *in situ*)*,* for example, and preferably, preferably by means of the matrix that binds the sheets, through a resin. This option is only carried out in the final location of the fixed tubular structure, that is, it is not used to obtain the portable tubular structure. In this case of gluing the outer and inner layers together in the portable structure, a maximum of 40% of the surface of the layers will be glued using a flexible plastic glue, because if this percentage is higher, the material that binds the fibers of the sheets in the layers of the tubular structure could not cross though.

In the preferred case of using connectors to join the outer and inner layers, said connectors are placed by drilling the layers, after removing the inner bag from the structure, and before applying the resin or cementitious matrix to the layers, in order to harden the sheets.

Optionally, the fixed tubular structure obtained can be treated with materials for painting, whitewashing, decorating, among others.

According to a particular embodiment, the process for manufacturing the fixed tubular structure comprises:
1 - Interstitching at least two meshes or sheets, one of carbon fiber and the other one of glass fiber, for the inner layer, and at least two other sheets of the same materials - with a reverse distribution with respect to the inner layer - for the outer layer (see Figure 1)-
2. Gluing the two sets of interstiched sheets - one on each side - to a double sheet that will form the bag - which once heat-sealed forms the intermediate layer -, using a glue for flexible plastics.
3. placing of valves for filling the plastic bag that makes up the intermediate layer.
4. Sealing of the plastic bag of the intermediate layer, in the form of a tube with a heat sealer (leaving the opening of the valve or valves, which is used to introduce a foam and to control the exit of the excess foam introduced).
5. arranging and inflating an inner bag in the hole that forms the inner layer; once the inner bag is inflated inside the tube, the intermediate layer is filled
6. After several hours, preferably 24 h, the balloon or inner bag is deflated for its subsequent extraction.
7. In order to harden the sheets of the outer and inner layers, the materials that bind the sheets and the fibers of the sheets, such as the aforementioned resins, are injected or sprayed.

In turn, they are protected from the elements.

The inflation of the inner bag can be carried out by means of a compressed air compressor.

The polymeric matrix (resin or geopolymers) or cementitious material is applied "in situ" on the sheets of the outer and inner layers, thus obtaining the FRP or FML materials. The matrix material is introduced among the fibers, occupying the space available in the voids and binding them together. According to the language used by experts, the matrix material "wets" the fibers of the sheets.

The tubular structure is capable of being inflated "in situ" acquiring its final shape in the final location through inflation.

The materials that bind the sheets of the outer and inner layers have the function of acting as hardening, reinforcing or "core reinforcement" materials to give rigidity to the previously made tubular structure.

According to an alternative embodiment, the manufacturing process for the fixed tubular structure comprises:
- arranging the previously manufactured portable tubular structure, which in this case comprises a plastic wrap, in the location of the fixed tubular structure
- inserting an internal bag into the interior hole of the structure
- filling the inner bag by inflation or injection
- filling the bag of the intermediate layer with the filling material
- removing the inner bag
- applying the material that binds the sheets of the outer and inner layers of the tubular structure from the previous step, by means of a vacuum-infusion process, obtaining the fixed tubular structure.

The vacuum-infusion process, which is carried out after the step of filling the intermediate layer, comprises:
- arranging at least one valve in the outer layer and at least one valve in the inner layer of the structure, through which vacuum is made,
- arranging at least one valve in the outer layer and at least one valve in the inner layer of the structure through which the matrix material that binds the fibers is injected
- applying a vacuum through the vacuum valves, while the matrix material that binds the fibers is injected through the material injection valves.

The infusion-vacuum process for the application of the matrix material has the advantages that no previous molds are needed in the workshop, since the intermediate layer after swelling acts as an "in situ" mold.

In the process of the present invention, autoclaves are not needed, the hardening of the materials is carried out at room temperature.

Finally, the aforementioned paints or limes can be applied for protective and/or decorative purposes.

The invention is applicable to current infrastructures of the "hyperloop" concept or to wind tower shafts.

### BRIEF DESCRIPTION OF THE FIGURES

Figure 1: Infographic of the section of a particular embodiment of the tubular structure of the invention, wherein:
   1: FRP I FML sheets with carbon fiber
   2: FRP / FML sheets with glass fiber
   3: plastic bag
   4: Polyurethane foam
   IN: inner layer
   I: middle layer
   E: outer layer
   5: connectors
   The connectors can be seen, which are placed radially and separated at an angle of approximately 30°. Throughout the fixed hybrid tubular structure, the connectors maintain a separation that can be between 10 and 50 cm, preferably 30 and 50 cm.
**Figure 2****:** photograph of the circular section of a particular embodiment of the structure of the invention.

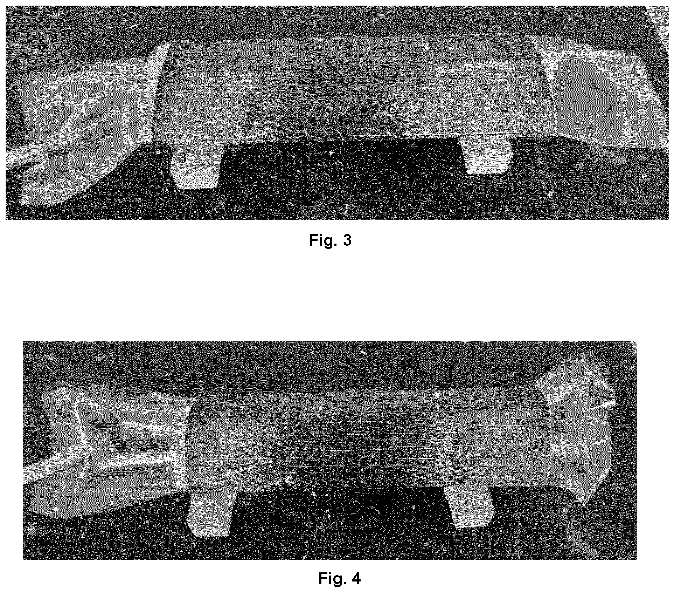

**Figure 3****:** a particular embodiment of the tubular structure before inflation of the polymeric bag. Two bags are seen in the figure: the one on the left of the figure is the bag arranged in the gap formed by the inner layer, and the other bag is the plastic bag that forms the intermediate layer of the structure. This figure shows the orientation of the sheets, which is longitudinal
**Figure 4****:** A particular embodiment of the tubular structure, wherein the inner bag is inflated, but the interlayer bag has not yet been filled

## Claims

1. A portable tubular structure comprising at least the following concentric layers:
- an inner layer, formed by at least one sheet,
being the free surface of the inner layer, which is the innermost surface, capable of forming a hole when the structure is in the extended position
- an intermediate layer, to which the inner layer is attached, said intermediate layer is a bag capable of housing a filling material,
- an outer layer, joined to the intermediate layer, said outer layer is formed by at least one sheet of the same material, or a different material, than the sheet of the inner layer.

2. Portable tubular structure according to claim 1, further comprising an outer plastic sheet in contact with the outer layer and an inner plastic sheet in contact with the free surface, or innermost face, of the inner layer, such that both outer and lower sheets form a casing that encloses the outer layer and the inner layer of the portable structure.

3. Portable tubular structure according to claim 1 or 2, comprising at least the following concentric layers:
- an inner layer, formed by at least one sheet selected from carbon fiber sheets, glass fiber sheets, plastic fiber sheets, basalt fiber sheets, aramid sheets, polyamide fiber sheets, metal sheets, and combinations of said sheets
whose free surface, which is the innermost surface, is capable of forming a hole when the structure is in the extended position.
- an intermediate layer, to which the inner layer is attached, said intermediate layer is a bag capable of housing a filling material,
- an outer layer, joined to the intermediate layer, such that said outer layer is formed by at least one sheet selected from carbon fiber sheets, glass fiber sheets, plastic fiber sheets, basalt fiber sheets, aramid, sheets, polyamide fiber sheets, metal sheets and combinations of said sheets.

4. Portable tubular structure according to one of claims 1 to 3, in which the outer layer and the inner layer are formed by the same number of sheets or by different numbers of sheets.

5. Portable tubular structure according to one of claims 1 to 4, wherein the outer layer and the inner layer are formed by the same number of sheets, these sheets being of identical composition in both layers, but being arranged in the inner layer in order reverse of that found in the outer layer.

6. Portable tubular structure according to one of claims 1 to 5, wherein:
- the outermost sheets
- or the innermost sheet
- or the outermost sheet and the innermost sheet of the structure
are made of carbon fiber.

7. Portable tubular structure according to one of claims 1 to 5, wherein the outermost sheet, or the innermost sheet, or both, of the structure are made of carbon fiber attached to a glass fiber sheet.

8. Portable tubular structure according to one of claims 1 to 5, wherein the outer layer is formed - from the outside inwards - by at least two sheets: a carbon fiber sheet and a glass fiber sheet, while the inner layer is formed - from the surface furthest from the center of the structure inwards - by sheets identical to those of the outer layer, placed in reverse order.

9. Fixed tubular structure comprising the concentric layers of the portable structure previously defined in one of claims 1 to 8, wherein:
- in the inner layer, attached to the intermediate layer, the fibers of the sheet or sheets are bound together by a matrix,
and whose free surface forms the central, longitudinal interior hole of the fixed tubular structure,
- the intermediate layer comprises a filling material inside the bag,
- in the outer layer, joined to the intermediate layer on the opposite side to the one, to which the intermediate and inner layers are joined, the fibers of the sheet or sheets are bound by a matrix.

10. Fixed tubular structure according to claim 9, wherein the matrix that binds the sheets of the outer and inner layers is selected from a polymeric matrix and a cementitious matrix.

11. Fixed tubular structure according to claim 9 or 10, further comprising an outer plastic sheet in contact with the outer layer, and an inner plastic sheet in contact with the free surface, or innermost face, of the inner layer, such that both outer and inner sheets form a casing that encloses the outer layer and the inner layer of the fixed structure.

12. Fixed tubular structure according to one of claims 9 to 11, wherein the inner, the outer layer or both, are made of FRP, FML or combinations thereof.

13. Fixed tubular structure according to one of claims 9 to 12, wherein the materials that make up the sheets are selected from among carbon fibers, glass fibers, plastic fibers, basalt fibers, aramid fibers, polyamide fibers, and metals.

14. Fixed tubular structure according to one of claims 9 to 13, wherein the inner layer, the outer layer, or both layers, are made of FRP comprising carbon fiber and FRP comprising glass fiber.

15. Fixed tubular structure according to one of claims 9 to 14, wherein the outer layer or the inner layer, or both, are made of FRP and the polymeric matrix comprises materials selected from among:
- resins, preferably polyester resins, polyamide resins, vinylester resins, acrylic resins, epoxy resins, phenolic resins, urethane resin,
- cementitious materials and
- geopolymers,
and combinations thereof

16. Fixed tubular structure according to one of claims 9 to 15, in which the outer layer, inner layer, or both layers are made of FML and the polymeric matrix comprises materials selected from:
- resins, preferably polyester resins, polyamide resins, vinylester resins, acrylic resins, epoxy resins, phenolic resins, urethane resins and
- geopolymers and combinations thereof.

17. Fixed tubular structure according to one of claims 9 to 16 comprising at least the following concentric layers:
- an inner layer formed by at least one sheet of a material selected from among: FRP and FML, and whose free surface forms the central, longitudinal interior hole of the tubular structure,
- an intermediate layer, to which the inner layer and the outer layer are attached by opposite sides of the intermediate layer, said intermediate layer is formed by a bag of flexible material, comprising a filling material,
- an outer layer, joined to the intermediate layer, said outer layer is formed by at least one sheet of a material selected from among: FRP and FML.

18. Fixed tubular structure according to one of claims 9 to 17, wherein the outer layer and the inner layer are formed by the same number of sheets, these sheets being of identical composition in both layers, but being arranged in the inner layer in order reverse of the order found in the outer shell.

19. Fixed tubular structure according to one of claims 9 to 18, wherein the outermost sheet of the structure, or the innermost sheet of the structure, or both are made of FRP comprising carbon fiber.

20. Fixed tubular structure according to one of claims 9 to 18, wherein the innermost sheet of the outer layer, the outermost sheet of the inner layer of the structure, or both, are made of FRP comprising glass fiber.

21. Fixed tubular structure according to one of the claims 9 to 18, in which the outer layer is formed by a carbon fiber FRP sheet and a glass fiber FRP sheet, while the inner layer is formed, from the surface furthest away from the center of the structure towards the inside, by sheets identical to those of the outer layer, placed in reverse order.

22. Fixed tubular structure according to one of claims 9 to 18, wherein the outer layer is formed by two sheets: an outer one made of FML with carbon fiber, and an inner one attached to it, made of FML with glass fiber, and the inner layer is made up of two sheets identical to those of the outer layer, such that in the inner layer the FML sheet with carbon fiber is the innermost of them.

23. Fixed tubular structure according to one of claims 9 to 18, wherein the outer layer is formed by one or several sheets of FRP and FML, while the inner layer is formed, from the surface furthest from the center of the structure towards the interior, by sheets identical to those of the outer layer, placed in reverse order.

24. Fixed tubular structure according to one of claims 9 to 23, whereon the fiber sheets which form the inner and outer layers in the fixed tubular structure are formed by fibers that are arranged in the same direction, or in more than one direction, with respect to the longitudinal axis of the fixed tubular structure.

25. Fixed tubular structure according to one of claims 9 to 24, wherein each of the sheets of fibers, that make up the inner and outer layers, have a thickness between 0.5 mm and 3 mm.

26. Fixed tubular structure according to one of claims 9 to 25, wherein the bag of the intermediate layer is filled with an expandable material, preferably a foam, gas or cementitious material.

27. Fixed tubular structure according to one of claims 9 to 26, further comprising a coating formed by one or more protective or decorative layers or both.

28. Fixed tubular structure according to one of claims 9 to 27, comprising microperforated FML materials.

29. A process for manufacturing a portable tubular structure defined in one of claims 1 to 8, comprising:
- arranging the sheets of the outer layers,
- arranging a double sheet that will form the bag of the intermediate layer,
- arranging the sheets of the inner layer,
- joining the sheets of the outer layer and, independently, joining the sheets of the inner layer,
- joining the previous layers, and
- arranging at least one valve in the double sheet of flexible material for the introduction of filling material,
the steps being able to be carried out in an order other than the order in which they appear mentioned, and in particular, the last two steps can be carried out in reverse order.

30. A process according to claim 29 comprising:
- arranging the sheets of the outer layers extended,
- arranging on them, the double sheet of flexible material that will form the bag of the intermediate layer,
- arranging the sheets of the inner layer on the previous double sheet,
- joining all the previous sheets by their ends
- arranging at least one valve in the double sheet of flexible material for the introduction of filling material.

31. A process according to claim 29 or 30 comprising:
- arranging an extended plastic sheet
- arranging the sheets of the outer layers on it
- arranging on them, the double sheet that will make up the bag of the intermediate layer
- arranging on the previous double sheet, the sheets of the inner layer
- arranging a second plastic sheet, on the sheets of the inner layer
- joining all the previous sheets by their ends
- arranging at least one valve in the double sheet of flexible material for the introduction of filling material,
- arranging valves in the outer and inner layers in order to carry out a vacuum-infusion process in the final location.

32. A process according to one of claims 29 to 31, wherein the sheets of each of the outer and inner layers are joined together by interstitching.

33. A process according to one of claims 29 to 32, wherein the outer and inner layers are attached to the bag that forms the intermediate layer by gluing.

34. A process according to claims 29 to 33, comprising:
- interstitching at least two meshes or sheets, one of carbon fiber and the other of glass fiber, for the inner layer, and at least two other sheets of the same materials - with an reverse distribution with respect to the inner layer - for the outer layer
- gluing the two sets of interstitched sheets on one side, and on the opposite side of the double-sheet bag, that will make up the bag of the intermediate layer,
- placing at least one valve for filling in a double sheet, that will make up the bag of flexible material, which in turn, makes up the intermediate layer
- sealing of the bag of flexible material of the intermediate layer, in the form of a tube, leaving the opening of the valve or valves, which serves to introduce an expansive material and control the exit of the excess material introduced.

35. A method according to one of claims 29 to 34, further comprising
- arranging the portable tubular structure, previously manufactured, in the location of the fixed hybrid tubular structure,
- inserting an internal bag into the internal hole of the portable structure,
- filling the inner bag by inflation or injection,
- filling the intermediate polymeric bag with the filling material,
- removing the inner bag
- applying the material that binds the sheets of the outer and inner layers of the tubular structure of the previous step, obtaining the fixed tubular structure defined in claim 9.

36. A method according to claim 35, comprising
- arranging the portable tubular structure, previously manufactured, comprising a plastic wrap, in the location of the fixed tubular structure
- inserting an internal bag into the interior hole of the structure
- filling the inner bag by inflation or injection
- filing the bag of the intermediate layer with the filling material
- removing the inner bag
- applying the material that binds the sheets of the outer and inner layers of the tubular structure from the previous step, by means of a vacuum-infusion process, obtaining the fixed tubular structure.

37. A process according to claim 36, wherein the vacuum-infusion process, which is carried out after the step of filling the intermediate layer, comprises:
- arranging at least one valve in the outer layer and at least one valve in the inner layer of the structure through which evacuation is made,
- arranging at least one valve in the outer layer, and at least one valve in the inner layer of the structure, through which the material of the matrix that binds the fibers is injected,
- making a vacuum through the vacuum valves, while the matrix material that binds the fibers is injected through the material injection valves.

38. A process according to one of the claims 35 to 37, wherein:
the joining of the outer and inner layers is carried out by means of connectors arranged between them, so that the connectors are placed by drilling holes in the layers, after removing the inner bag of the structure, and before applying the material that binds the sheets of the outer and inner layers.

39. A process according to one of claims 35 to 37, wherein the joining of the outer and inner layers to the intermediate layer, is carried out by joining their contour by means of a flexible plastic glue, at most on 40% of the surface of the layers.
